# FASCICULE DE BREVET EUROPEEN

(11) **EP 1 877 746 B1**
(45) Date de publication et mention de la délivrance du brevet: **03.12.2008**
(21) Numéro de dépôt: 06726079.4
(22) Date de dépôt: 13.03.2006
(51) Int. Cl.: G01L 5/16

(54) **DISPOSITIF DE MESURE DE FORCE PAR DETECTION RESISTIVE A DOUBLE PONT DE WHEATSTONE**
EINRICHTUNG ZUR KRAFTMESSUNG DURCH RESISTIVE DETEKTION MIT DOPPELTER WHEATSTONEBRÜCKE
DEVICE FOR MEASURING FORCE BY RESISTIVE DETECTION WITH DOUBLE WHEATSTONE BRIDGE

(30) Priorité: 17.03.2005 FR 0502649
(43) Date de publication de la demande: 16.01.2008
(73) Titulaire: COMMISSARIAT A L'ENERGIE ATOMIQUE, 75015 Paris (FR)
(72) Inventeur: REY, Patrice, F-38430 Saint-Jean-de-Moirans (FR)
(74) Mandataire: Stankoff, Hélène
(86) Numéro de dépôt international: PCT/FR2006/000550
(87) Numéro de publication internationale: WO 2006/097613

(56) Documents cités:
- US-A- 4 530 244
- US-A- 4 745 812
- US-A- 5 259 248
- US-A1- 2004 164 753
- US-A1- 2005 011 270
- US-B1- 6 289 738
- PATENT ABSTRACTS OF JAPAN vol. 2002, no. 02, 2 avril 2002 (2002-04-02) -& JP 2001 272293 A (DENSO CORP), 5 octobre 2001 (2001-10-05)

## Description

La présente invention concerne un dispositif de mesure de force par détection résistive à double pont de Wheatstone.

Elle concerne également un procédé de fabrication d'un tel dispositif de mesure.

De manière générale, la présente invention concerne le domaine des capteurs de tous types de force (force, pression, moment ou accélération angulaire ou linéaire) mettant en oeuvre des jauges résistives montées selon deux ponts de Wheatstone orientés dans deux directions différentes.

Ce type de capteur de force peut être intégré dans tout système où l'on cherche à mesurer une force (pneumatique, manette de commande ou joystick pour jeux vidéos ... ) ou une accélération (déclenchement d'air bag dans une automobile, pacemaker, ... ).

Un capteur de force de l'état de la technique est notamment décrit dans le document US 4 745 812.

Ce capteur réalisé par les techniques de la micro technologie comporte des éléments de détection piézorésistifs montés en double pont de Wheatstone dans un plan d'un support déformable. Ces jauges sont réparties selon deux directions perpendiculaires de manière à détecter les composantes dans l'espace de la force appliquée au support déformable.

Dans le document JP 2001/272293, les jauges d'un pont de Wheatstone sont alignées et disposées sur une portion d'une membrane située d'un unique côté de la direction d'alignement des jauges d'un autre pont de Wheastone.

Le déséquilibre d'un premier pont de Wheatstone, constitué par l'interconnexion de quatre jauges alignées selon une première direction, est proportionnel à la composante de la force suivant cette première direction. Le déséquilibre d'un second pont de Wheatstone, constitué par l'interconnexion de quatre jauges alignées selon une seconde direction, est proportionnel à la composante de la force suivant cette seconde direction. Le mode commun des deux ponts est proportionnel à la composante de la force appliquée selon une direction perpendiculaire au plan du support déformable.

Lors de la réalisation de la structure d'un tel capteur par les moyens de la micro technologie, l'interconnexion des ponts de Wheatstone nécessite de réaliser des croisements isolants des pistes conductrices. En pratique, ces croisements isolants sont obtenus par un empilement de deux niveaux métalliques. Un tel empilement représente un surcoût de fabrication et des risques de défaillance du capteur avec baisse du rendement.

La présente invention permet de résoudre les inconvénients précités et de proposer un dispositif de mesure de force de fabrication simplifiée.

La présente invention vise un dispositif de mesure de force par détection résistive à double pont de Wheatstone comprenant au moins huit jauges résistives placées sur une membrane déformable sensiblement plane et alignées suivant deux directions différentes, les jauges résistives d'au moins un pont de Wheatstone étant disposées sur une portion de membrane située d'un unique côté de la direction d'alignement des jauges résistives de l'autre pont de Wheatstone.

Selon l'invention, deux jauges d'au moins un pont de Wheatstone sont placées sur une zone non déformable de la membrane, les au moins huit jauges résistives étant interconnectées sans croisement des pistes conductrices.

L'interconnexion des jauges des ponts de Wheatstone peut ainsi être réalisée avec un seul niveau de matériau conducteur. Les coûts de fabrication peuvent ainsi être diminués et le rendement de fabrication d'un tel dispositif de mesure est augmenté.

Pour réaliser cette disposition des jauges sur une membrane déformable, et pour maintenir l'alignement des jauges suivant une direction du plan de la membrane, au moins deux jauges d'un pont sont placées sur une zone non déformable de la membrane.

Selon un mode de réalisation de l'invention, deux jauges d'au moins un pont de Wheatstone sont placées sur une zone centrale de la membrane au niveau de laquelle est fixée une tige rigide.

Selon une caractéristique de mise en oeuvre pratique de l'invention, deux jauges de chacun des deux ponts de Wheatstone sont placées sur une zone non déformable de la membrane.

Selon un second aspect, l'invention concerne également un procédé de fabrication d'un dispositif de mesure tel que décrit précédemment, ce procédé de fabrication comprenant un unique dépôt d'un matériau conducteur pour réaliser l'interconnexion des jauges résistives en double pont de Wheatstone.

D'autres particularités et avantages de l'invention apparaîtront encore dans la description ci-après.

Aux dessins annexés, donnés à titre d'exemples non limitatifs :
- la figure 1 est une vue en coupe transversale d'un dispositif de mesure de force conforme à un premier mode de réalisation de l'invention;
- la figure 2 est une vue schématique de dessus du dispositif de mesure de force de la figure 1 illustrant le montage d'un double pont de Wheatstone ;
- la figure 3 est un schéma électrique illustrant l'interconnexion des jauges en double pont de Wheatstone du dispositif de mesure de force de la figure 1;
- la figure 4 est une vue en coupe transversale d'un dispositif de mesure de force conforme à un second mode de réalisation de l'invention ;
- la figure 5 est une vue schématique de dessus illustrant le montage d'un double pont de Wheatstone du dispositif de mesure de la figure 4 ;
- la figure 6 est une vue de dessus illustrant le montage d'un double pont de Wheatstone d'un dispositif de mesure de force conforme à un troisième mode de réalisation de l'invention ; et
- les figures 7A à 7J illustrent la succession des étapes d'un procédé de fabrication conforme à un mode de réalisation de l'invention.

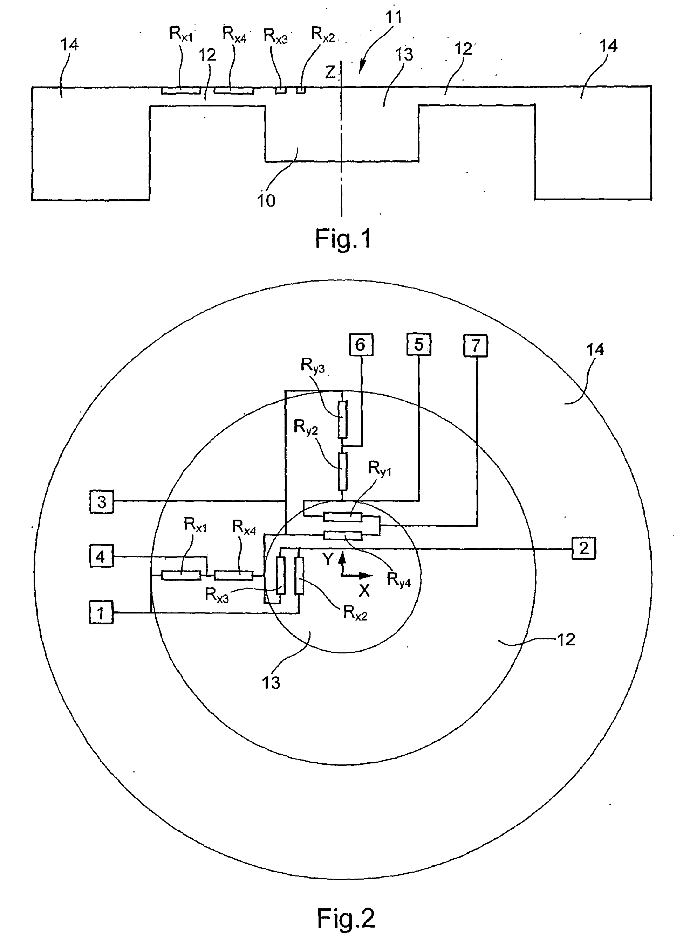

On va décrire tout d'abord en référence à la figure 1 un dispositif de mesure de force conforme à un premier mode de réalisation de l'invention.

Le capteur de force illustré a une structure particulière du type "clou". Il comporte une tige rigide 10 surmontée d'une tête 11.

Cette tête 11 du dispositif de mesure comporte une membrane déformable et sensiblement plane 12 capable de se déformer lorsque la tige 10 est sollicitée par une force ou un moment, ou encore lorsque la sollicitation de la structure complète par une accélération induit une déformation de cette membrane 12.

Dans cet exemple de réalisation, la membrane déformable est une membrane circulaire pleine, sa liaison avec la tige 10 étant réalisée dans une zone centrale non déformable 13.

Bien entendu, cette membrane déformable pourrait être de structure différente, et par exemple être réalisée à partir de différents bras s'étendant entre la zone centrale 13 et une zone périphérique 14 de la membrane.

Cette zone périphérique 14 comporte des points d'ancrage qui possède une position par rapport à la tige 10 au repos du dispositif de mesure et qui conserve sensiblement cette position lorsque la tige ou l'ensemble de la structure est sollicité par une force.

Dans l'exemple des figures 1 et 2, il existe une multitude de points d'ancrage continus, s'étalant sur la zone périphérique 14 de la membrane 12.

Bien entendu, les points d'ancrage pourraient également être réalisés de manière discrète.

Cette zone périphérique 14 de la membrane 12 est également non déformable.

La membrane 12 comporte ainsi une zone déformable en forme de disque, avec une portion centrale 13 non déformable. Elle pourrait également être constituée de secteurs de disque disjoints.

La membrane déformable 12 comporte des éléments de mesure qui sont ici constitués de huit jauges piézorésistives montées en double pont de Wheatstone.

Dans ce mode de réalisation, les jauges piézorésistives sont alignées quatre par quatre suivant deux directions différentes, et ici selon deux directions perpendiculaires dans le plan de la membrane déformable 12.

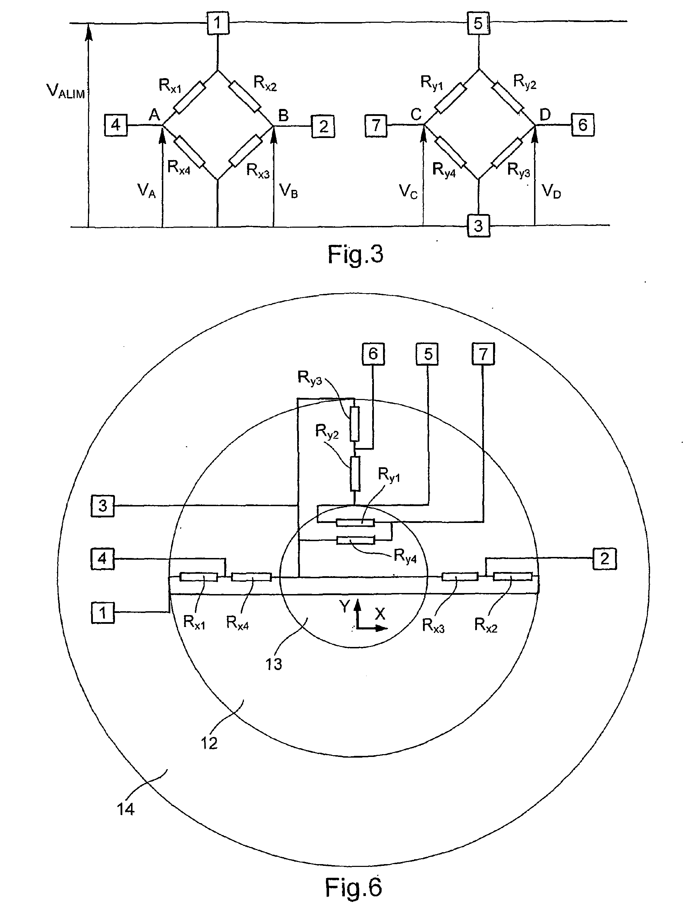

En particulier, quatre premières jauges Rₓ₁, Rₓ₂, Rₓ₃, Rₓ₄ sont alignées suivant une première direction X du plan de la membrane 12 et connectées en pont de Wheatstone comme illustré à la figure 3. Le déséquilibre de ce pont de Wheastone, mesuré par la différence des tensions V_{B} - V_{A}, est proportionnel à la composante de la force ou de l'accélération suivant la direction X.

De même, quatre jauges R_{y1}, R_{y2}, R_{y3}, R_{y4} sont alignées suivant une deuxième direction Y, perpendiculaire à la direction X. Comme illustré à la figure 3, ces jauges sont connectées en pont de Wheatstone de telle sorte que le déséquilibre du pont, représenté par la différence des tensions V_{D} - V_{C}, est proportionnel à la composante de la force ou de l'accélération suivant cette direction Y.

Le mode commun des deux ponts de Wheatstone, représenté par la différence des tensions (V_{A} + V_{B}) - (V_{C} + V_{D}), est proportionnel à la composante de la force ou de l'accélération suivant la direction Z perpendiculaire au plan de la membrane 12.

Les jauges résistives associées à chaque pont de Wheatstone sont disposées respectivement sur des portions disjointes de membrane 12, c'est-à-dire que le plan de la membrane peut être partitionné de telle sorte que les jauges piézorésistives de chaque pont appartiennent à des portions distinctes de la partition.

Il est ainsi possible de réaliser les connexions des différentes jauges piézorésistives, illustrées sur la figure 2 par les différents traits rectilignes, indépendamment, sans croisement des conducteurs.

Dans ce mode de réalisation, les jauges résistives de chaque pont de Wheatstone sont disposées sur une portion de membrane située d'un unique côté par rapport à la direction d'alignement des jauges résistives de l'autre pont de Wheastone.

Pour des raisons de dimensionnement du dispositif de mesure, la Demanderesse a constaté qu'il était possible de disposer au moins deux jauges de chacun des ponts de Wheatstone sur une zone non déformable de la membrane 12.

Dans cet exemple de réalisation, deux jauges Rₓ₂, Rₓ₃ et R_{y1}, R_{y4} de chacun des ponts de Wheatstone sont placées sur la zone centrale 13 de la membrane 12, c'est-à-dire la zone centrale solidaire de la tige rigide 10.

De ce mode de réalisation où les jauges résistives présentent une forme parallélépipédique allongée et possèdent ainsi une plus grande dimension selon une direction, les jauges disposées sur une zone non déformable de la membrane sont placées transversalement par rapport à la direction d'alignement des jauges du pont de Wheatstone auquel elles appartiennent. Elles pourraient bien entendu être orientées de toute autre manière.

En reportant ainsi une partie des jauges de chacun des ponts de Wheatstone sur une zone non déformable de la membrane, on obtient une sensibilité moindre du capteur de force. Cependant, cette disposition des jauges sur une partie non déformable permet le montage des jauges résistives de chacun des ponts sur des portions disjointes de membrane, sans complexifier les équations de calcul au niveau du double pont de Wheatstone permettant de mesurer l'intensité et l'orientation de la force appliquée sur le dispositif de mesure.

Bien entendu, d'autres configurations permettant de mettre en oeuvre l'invention peuvent être utilisées.

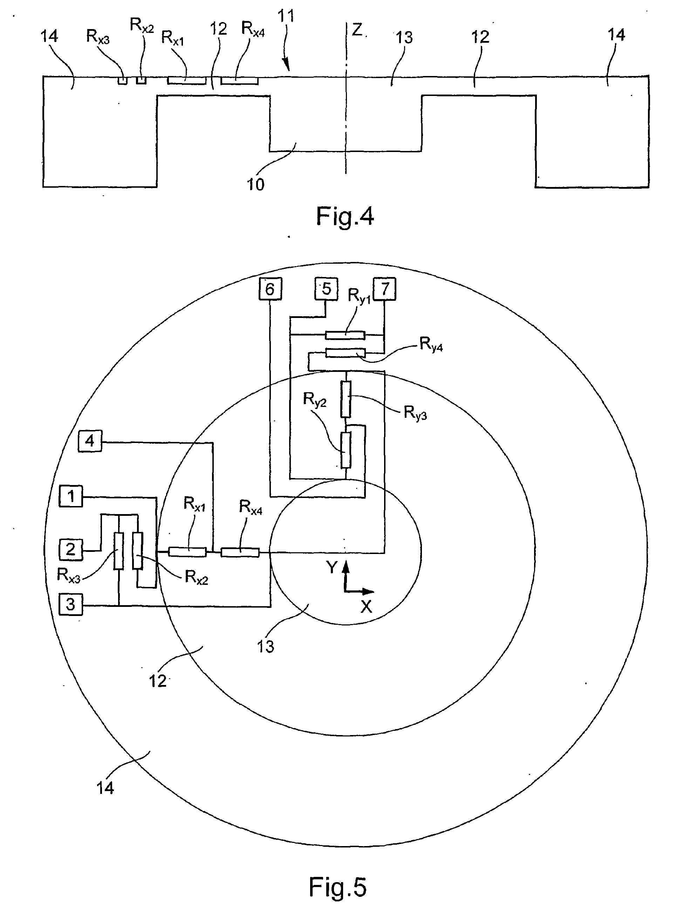

Comme illustré sur les figures 4 et 5, les jauges de chacun des ponts de Wheatstone peuvent être placées sur la zone périphérique 14 de la membrane 12, cette zone périphérique 14 comportant les points d'ancrage de la membrane déformable 12.

Comme dans le mode de réalisation précédent, les jauges résistives de chacun des ponts de Wheatstone sont disposées sur une portion de membrane située d'un unique côté par rapport à la direction d'alignement des jauges résistives de l'autre pont de Wheatstone.

Cette disposition des jauges sur des portions disjointes de membrane permet de réaliser l'interconnexion des différentes jauges résistives en double pont de Wheatstone sans nécessiter le croisement des connexions.

Le montage en double pont de Wheatstone des jauges tel qu'illustré à la figure 5 est identique à celui illustré à la figure 3 et décrit précédemment en référence au mode de réalisation précédent.

Comme bien illustré sur la figure 6, seules les jauges d'un pont de Wheatstone, ici le pont de Wheatstone associé à la seconde direction Y, peuvent être disposées sur une portion de membrane située d'un unique côté de la direction d'alignement X des jauges résistives de l'autre pont de Wheatstone.

Dans ce mode de réalisation, les jauges résistives du pont de Wheatstone associées à la première direction X sont disposées de part et d'autre de la seconde direction Y.

Ce type de réalisation permet également de réaliser l'interconnexion des différentes jauges résistives en double pont de Wheatstone sans nécessiter le croisement des connexions.

La connexion des différentes jauges résistives est identique à celle décrite précédemment en référence à la figure 3.

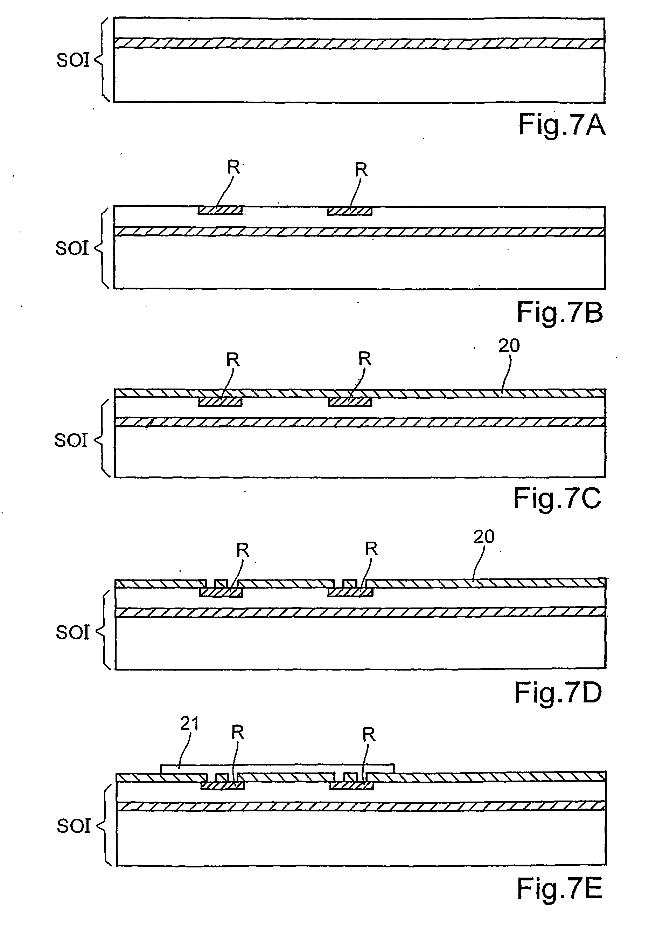

On va décrire à présent en référence aux figures 7A à 7J un procédé de fabrication d'un dispositif de mesure de force tel que décrit précédemment.

Le procédé de fabrication utilise dans ce mode de réalisation des techniques de micro technologie.

Bien entendu, d'autres techniques plus conventionnelles pourraient également être mises en oeuvre pour réaliser un dispositif de mesure de force conforme à l'invention.

A partir d'un substrat SOI (Silicium sur isolant) tel qu'illustré à la figure 7A, on réalise l'implantation des jauges résistives, par exemple du type P dans un substrat de type N. Bien qu'on ait illustré sur la figure 7B l'implantation de deux jauges R seulement, l'ensemble des jauges résistives nécessaires à la mise en oeuvre du dispositif de mesure est implanté bien entendu à cette étape.

Comme illustré à la figure 7C, une couche de passivation 20 est déposée sur le substrat SOI pour recouvrir les jauges R.

On réalise ensuite des ouvertures dans la couche de passivation 20, comme illustré à la figure 7D afin d'obtenir des trous de contact avec les jauges R.

On réalise ensuite la gravure des conducteurs permettant les liaisons électriques et les différentes connexions des jauges R, et notamment la réalisation et le montage des jauges en pont de Wheatstone. Cette gravure est réalisée par un dépôt de matériau conducteur 21 comme illustré à la figure 7E.

Le matériau conducteur peut être constitué d'une ou plusieurs couches de matériaux conducteurs comme par exemple Ti-Ni-Au ou Cr-Au ou Ti-TiN-Au ...

Comme bien décrit précédemment, les différentes jauges R étant disposées sur des portions disjointes de la membrane, un unique dépôt de matériau conducteur 21 permet de réaliser l'ensemble des connexions requises pour réaliser le montage en double pont de Wheatstone des différentes jauges R.

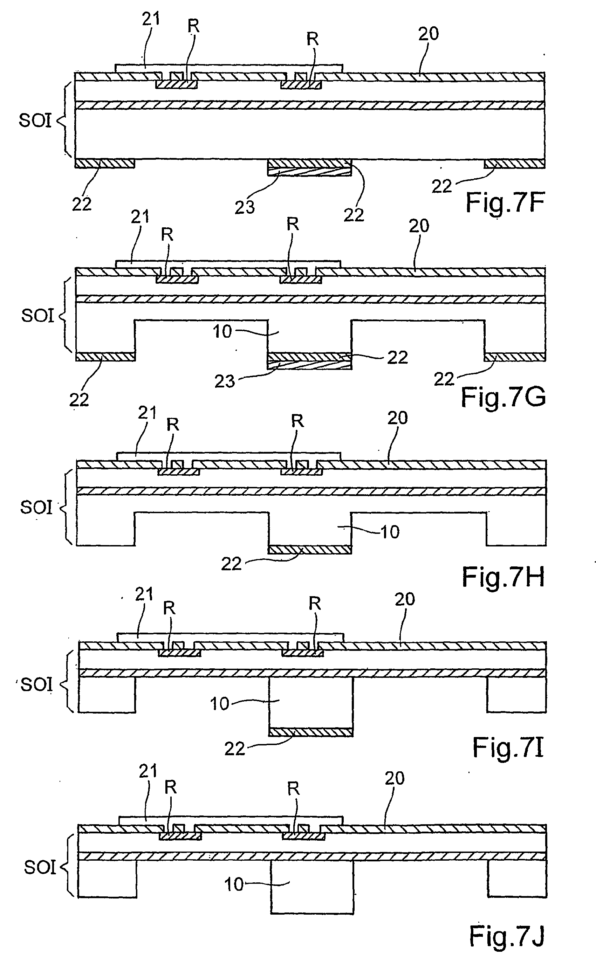

Comme bien illustré sur la figure 7F, on réalise ensuite sur la face arrière du substrat SOI un double masque de gravure 22, 23.

Une première gravure profonde est mise en oeuvre comme illustré à la figure 7G permettant d'amorcer la forme du dispositif de mesure, et notamment de réaliser la tige centrale 10.

Comme illustré sur la figure 7H, un des masques de gravure 23 est éliminé avant de réaliser comme illustré sur la figure 7I une deuxième gravure profonde permettant la gravure du substrat jusqu'à la couche d'isolant.

L'autre masque de gravure 22 est ensuite éliminé comme illustré sur la figure 7J, les différentes étapes de gravure de la face arrière permettant ainsi d'obtenir la structure en forme de clou du dispositif de mesure conforme à l'invention.

Comme indiqué précédemment, dans des techniques traditionnelles de réalisation d'un tel dispositif, les différentes parties de la structure pourraient être réalisées par usinage classique, puis assemblées. Les jauges métalliques R pourraient ensuite être collées sur la partie déformable, les connexions des différentes jauges étant ensuite réalisées comme décrit en référence aux étapes 7D et 7E par un unique dépôt de matériau conducteur permettant la réalisation des conducteurs.

Bien entendu, de nombreuses modifications peuvent être apportées à l'exemple de réalisation décrit précédemment sans sortir du cadre de l'invention.

Ainsi, les ponts de Wheatstone pourraient être orientés selon deux directions qui ne sont pas perpendiculaires.

D'autres types de jauges résistives pourraient également être utilisés dès lors que leur déformation, qui est en principe égale à celle de la structure sur laquelle elles sont collées, se traduit en variation de résistance. On peut utiliser des jauges métalliques ou encore d'autres types de jauges semi-conductrices que les jauges piézorésistives.

## Revendications

1. Dispositif de mesure de force par détection résistive à double pont de Wheatstone comprenant au moins huit jauges résistives (Rₓ₁, Rₓ₂, Rₓ₃, Rₓ₄, R_{y1}, R_{y2}, R_{y3}, R_{y4}) placées sur une membrane déformable (12) et sensiblement plane et alignées suivant deux directions différentes (X, Y), les jauges résistives (R_{y1}, R_{y2}, R_{y3}, R_{y4}) d'au moins un pont de Wheatstone étant alignées et disposées sur une portion de membrane (12, 13, 14) située d'un unique côté de la direction d'alignement (X) des jauges résistives (Rₓ₁, Rₓ₂, Rₓ₃, Rₓ₄) de l'autre pont de Wheatstone, **caractérisé en ce que** deux jauges (R_{y1}, R_{y4}) d'au moins un pont de Wheatstone sont placées sur une zone non déformable (13) de la membrane (12), lesdites au moins huit jauges résistives (R) étant interconnectées sans croisement de pistes conductrices.

2. Dispositif de mesure de force conforme à la revendication 1, **caractérisé en ce que** les jauges résistives (Rₓ₁, Rₓ₂, Rₓ₃, Rₓ₄, R_{y1}, R_{y2}, R_{y3}, R_{y4}) d'un premier, respectivement d'un second, pont de Wheatstone sont disposées sur une portion de membrane (12, 13, 14) située d'un unique côté de la direction d'alignement des jauges résistives (R_{y1}, R_{y2}, R_{y3}, R_{y4} ; Rₓ₁, Rₓ₂, Rₓ₃, Rₓ₄) du second, respectivement du premier, pont de Wheatstone.

3. Dispositif de mesure de force conforme à l'une des revendications 1 ou 2, **caractérisé en ce que** deux jauges (Rₓ₂, Rₓ₃ ; R_{y1}, R_{y4}) d'au moins un pont de Wheatstone sont placées sur une zone centrale (13) de la membrane solidaire d'une tige rigide (10).

4. Dispositif de mesure de force conforme à l'une des revendications 1 à 3, **caractérisé en ce que** deux jauges (Rₓ₂, Rₓ₃ ; R_{y1}, R_{y4}) d'au moins un pont de Wheatstone sont placées sur une zone périphérique (14) de la membrane, cette zone périphérique (14) comportant des points d'ancrage de la membrane déformable (12).

5. Dispositif de mesure de force conforme à l'une des revendications 1 à 4, **caractérisé en ce que** deux jauges (Rₓ₂, Rₓ₃ ; R_{y1}, R_{y4}) de chacun des ponts de Wheatstone sont placées sur une zone non déformable (13, 14) de la membrane.

6. Dispositif de mesure de force conforme à l'une des revendications 1 à 5, **caractérisé en ce que** la zone déformable de la membrane est un disque ou des secteurs de disque disjoints.

7. Dispositif de mesure de force conforme à l'une des revendications 1 à 6, **caractérisé en ce que** lesdites au moins huit jauges résistives (R) sont interconnectées en double pont de Wheatstone par un unique dépôt de matériau conducteur.

## Claims

1. Force measuring device by resistive detection using a double Wheatstone bridge comprising at least eight resistive gauges (Rₓ₁, Rₓ₂, Rₓ₃, Rₓ₄, R_{y1}, R_{y2}, R_{y3}, R_{y4}) placed on a deformable and substantially plane membrane (12) and aligned in two different directions (X, Y), the resistive gauges (R_{y1}, R_{y2}, R_{y3}, R_{y4}) of at least one Wheatstone bridge being aligned and disposed on a membrane portion (12, 13, 14) situated on one side only of the direction (X) of alignment of the resistive gauges (Rₓ₁, Rₓ₂, Rₓ₃, Rₓ₄) of the other Wheatstone bridge, **characterised in that** two gauges (R_{y1}, R_{y4}) of at least one Wheatstone bridge are placed on a non-deformable area (13) of the membrane (12), said at least eight resistive gauges (R) being interconnected without crossing over of conductive tracks.

2. Force measuring device according to claim 1, **characterised in that** the resistive gauges (Rₓ₁, Rₓ₂, Rₓ₃, Rₓ₄, R_{y1}, R_{y2}, R_{y3}, R_{y4}) of a first, respectively of a second, Wheatstone bridge are disposed on a membrane portion (12, 13, 14) situated on one side only of the direction of alignment of the resistive gauges (R_{y1}, R_{y2}, R_{y3}, R_{y4}; Rₓ₁, Rₓ₂, Rₓ₃, Rₓ₄) of the second, respectively of the first, Wheatstone bridge.

3. Force measuring device according to either of claims 1 and 2, **characterised in that** the two gauges (Rₓ₂, R_{X3}; R_{y1}, R_{y4}) of at least one Wheatstone bridge are placed on a central area (13) of the membrane attached to a rigid rod (10).

4. Force measuring device according to any one of claims 1 to 3, **characterised in that** the two gauges (Rₓ₂, Rₓ₃; R_{y1}, R_{y4}) of at least one Wheatstone bridge are placed on a peripheral area (14) of the membrane, that peripheral area (14) including anchor points for the deformable membrane (12).

5. Force measuring device according to any one of claims 1 to 4, **characterised in that** two gauges (Rₓ₂, Rₓ₃; R_{y1}, R_{y4}) of each of the Wheatstone bridges are placed on a non-deformable area (13, 14) of the membrane.

6. Force measuring device according to any one of claims 1 to 5, **characterised in that** the deformable area of the membrane is a disc or separate disc sectors.

7. Force measuring device according to any one of claims 1 to 6, **characterised in that** said at least eight resistive gauges (R) are interconnected in a double Wheatstone bridge circuit by a single deposition of conductive material.

## Patentansprüche

1. Vorrichtung zur Kraftmessung durch resistive Erfassung mit doppelter Wheatstonebrücke, umfassend mindestens acht resistive Messelemente (Rₓ₁, Rₓ₂, Rₓ₃, Rₓ₄, R_{y1}, R_{y2}, R_{y3}, R_{y4}), die auf einer verformbaren und im Wesentlichen ebenen Membran (12) angeordnet sind und in zwei verschiedenen Richtungen (X, Y) in einer Linie liegen, wobei die resistiven Messelemente (R_{y1}, R_{y2}, R_{y3}, R_{y4}) mindestens einer Wheatstonebrücke in einer Linie liegen und auf einem Membranabschnitt (12, 13, 14) angeordnet sind, der auf einer einzigen Seite der Fluchtrichtung (X) der resistiven Messelemente (Rₓ₁, Rₓ₂, Rₓ₃, Rₓ₄) der anderen Wheatstonebrücke gelegen sind, **dadurch gekennzeichnet, dass** zwei Messelemente (R_{y1}, R_{y4}) mindestens einer Wheatstonebrücke auf einer nicht verformbaren Zone (13) der Membran (12) angeordnet sind, wobei die mindestens acht resistiven Messelemente (R) ohne Kreuzung von leitenden Bahnen verschaltet sind.

2. Vorrichtung zur Kraftmessung nach Anspruch 1, **dadurch gekennzeichnet, dass** die resistiven Messelemente (Rₓ₁, Rₓ₂, Rₓ₃, Rₓ₄, R_{y1}, R_{y2}, R_{y3}, R_{y4}) einer ersten bzw. einer zweiten Wheatstonebrücke auf einem Membranabschnitt (12, 13, 14) angeordnet sind, der auf einer einzigen Seite der Fluchtrichtung der resistiven Messelemente (R_{y1}, R_{y2}, R_{y3}, R_{y4}; Rₓ₁, Rₓ₂, Rₓ₃, Rₓ₄,) der zweiten bzw. der ersten Wheatstonebrücke gelegen ist.

3. Vorrichtung zur Kraftmessung nach einem der Ansprüche 1 oder 2, **dadurch gekennzeichnet, dass** zwei Messelemente (Rₓ₂, Rₓ₃; R_{y1}, R_{y4}) mindestens einer Wheatstonebrücke auf einer zentralen Zone (13) der Membran angeordnet sind, die mit einer starren Stange (10) fest verbunden ist.

4. Vorrichtung zur Kraftmessung nach einem der Ansprüche 1 bis 3, **dadurch gekennzeichnet, dass** zwei Messelemente (Rₓ₂, Rₓ₃; R_{y1}, R_{y4}) mindestens einer Wheatstonebrücke auf einer Umfangszone (14) der Membran angeordnet sind, wobei diese Umfangszone (14) Punkte zur Verankerung der verformbaren Membran (12) umfasst.

5. Vorrichtung zur Kraftmessung nach einem der Ansprüche 1 bis 4, **dadurch gekennzeichnet, dass** zwei Messelemente (Rₓ₂, Rₓ₃; R_{y1}, R_{y4}) jeder der Wheatstonebrücken auf einer nicht verformbaren Zone (13, 14) der Membran angeordnet sind.

6. Vorrichtung zur Kraftmessung nach einem der Ansprüche 1 bis 5, **dadurch gekennzeichnet, dass** die verformbare Zone der Membran eine Scheibe oder getrennte Scheibensektoren ist.

7. Vorrichtung zur Kraftmessung nach einem der Ansprüche 1 bis 6, **dadurch gekennzeichnet, dass** die mindestens acht resistiven Messelemente (R) durch eine einzige Schicht aus leitendem Werkstoff als doppelte Wheatstonebrücke verschaltet sind.
